Europäisches Patentamt

European Patent Office

Office européen des brevets

(19)

(11) Numéro de publication: **0 147 345**
**B1**

(12) **FASCICULE DE BREVET EUROPEEN**

(45) Date de publication du fascicule du brevet: **27.06.90**

(21) Numéro de dépôt: **84430039.2**

(22) Date de dépôt: **26.11.84**

(51) Int. Cl.⁵: **F 24 J 2/34**

(54) **Dispositif de chauffe-eau solaire.**

(30) Priorité: **16.12.83 FR 8320318**

(43) Date de publication de la demande:
**03.07.85 Bulletin 85/27**

(45) Mention de la délivrance du brevet:
**27.06.90 Bulletin 90/26**

(84) Etats contractants désignés:
**BE CH DE GB IT LI NL**

(56) Documents cités:
**EP-A-0 022 686**
**WO-A-82/02087**
**FR-A-2 500 917**
**FR-A-2 508 150**
**FR-A-2 512 938**
**FR-A-2 526 925**
**GB-A-1 557 335**
**GB-A-2 125 158**

(73) Titulaire: **Leroy, Claude**
**Résidence de la Bretauche Rue du Plat d'Etain**
**F-45430 Checy (FR)**

(72) Inventeur: **Leroy, Claude**
**Résidence de la Bretauche Rue du Plat d'Etain**
**F-45430 Checy (FR)**

(74) Mandataire: **Roman, Michel**
**CABINET ROMAN 35, rue Paradis**
**F-13001 Marseille (FR)**

## Description

L'objet de l'invention concerne un dispositif de chauffe-eau solaire selon la première partie de la revendication 1. In tel dispositif est comun du EP—A—0022686.

Le FR—A—2508150 décrit un chauffe-eau solaire ave capteur associé à un accumulateur dans le même appareil.

L'invention est destiné à intégrer dans un même volume un double circuit de fluide liquide améliorant l'échange thermique.

Il est généralement utilisé dans ces dispositifs d'échangeurs, un véhicule thermique gazeux dont les effets sont moins rapides et les volumes d'eau échauffés plus réduits.

Le dispositif suivant la revendication 1 supprime ces inconvénients et permet une plus grande rapidité d'échauffement et d'échange.

Il est constitué par la combinaison des enveloppes sphériques et semi-sphériques superposées avec un double circuit l'un d'échauffement fermé et l'autre de consommation.

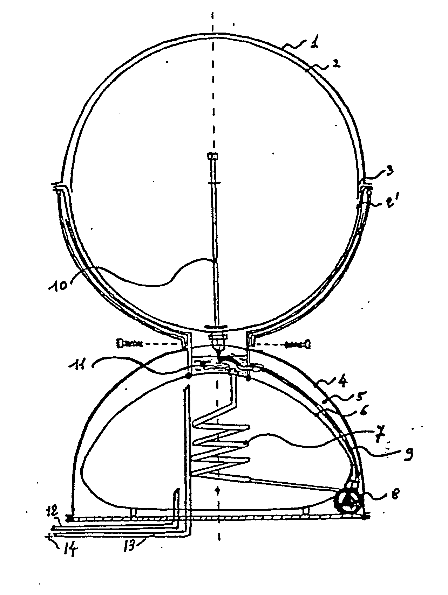

Sur le dessin annexé, donné à titre d'exemple non limitatif d'une des formes de réalisation de l'objet de l'invention, le dispositif est représenté vu en coupe longitudinale et dans son ensemble.

L'échangeur est constitué par une enveloppe sphérique externe 1 formée par deux demi sphères transparentes engendrant un effet de serre.

L'enveloppe sphérique 2, 2' est également constituée par deux demi sphères emboîtées l'une dans l'autre à l'équateur 3. Ses surfaces périphériques sont revêtues d'un colorant noir absorbant le rayonnement solaire.

La sphère supérieure est montée sur une seconde enveloppe semi-sphérique 4. La périphérie de cette demi sphère est isolée intérieurement par une garniture 5 (soit en billes de verre ou tout autre produit).

A l'intérieur de cette garniture isolante est disposé un réservoir 6. Ce réservoir contient un échangeur thermique 7 relié d'une part à sa partie inférieure au circulateur 8 qui emmène le fluide liquide par la canalisation 9 au bras de pulvérisation 10 qui projette le liquide atomisé sur la paroi chauffée du capteur sphérique.

Ce fluide surchauffé s'écoule dans le collecteur 11 et pénétre dans l'échangeur 7 immergé dans l'eau à réchauffer amenée dans le réservoir 6 par la conduite d'adduction 12.

L'eau chauffée est amenée à son point d'utilisation par la canalisation 13 munie d'une vanne d'arrêt 14.

Le circulateur 8 reprend le fluide caloporteur à la sortie de l'échangeur et le recycle dans le pulvérisateur.

On réliase ainsi un circuit fermé de chauffage.

Le réchauffement du fluide contenu dans le réservoir 6 est accéléré par le surchauffage rapide de l'eau divisée, projetée sur la totalité des surfaces chauffantes de la sphère.

La régulation différentielle qui commande la marche ou l'arrêt du circulateur 8 est obtenue par un circuit électronique relié à des sondes comparatrices entre la température de l'absorbeur solaire et du stock d'eau à chauffer.

## Revendications

1. Dispositif de chauffe-eau solaire comprenant un capteur solaire (1, 2) de forme sphérique avec une enveloppe extérieure transparente (1) et une enveloppe intérieure (2) revêtue d'un colorant absorbant le rayonnement solaire, et un circuit d'un premier fluide caloporteur avec une pompe (8), un pulvérisateur (10) situé à l'intérieur du capteur (1, 2) et projetant le fluide atomisé sur la surface intérieure de l'enveloppe intérieure (2), une canalisation (9) connectant la pompe (8) avec le pulvérisateur (10), et un collecteur (11) recueillant le fluide s'écoulant sur la surface intérieure, caractérisé en ce que le capteur (1, 2) est monté par un tube support sur un socle semi-sphérique (4) contenant un réservoir (6) calorifugé d'un second fluide, en ce que le collecteur (11) est formé par un espace situé dans le tube support, le circuit de fluide caloporteur comprend un échangeur de chaleur (7) situé dans le réservoir (6) et inséré entre le collecteur (11) et la pompe (8), et en ce que la canalisation (9) traverse le collecteur (11) et est en contact thermique avec le fluide recueilli dans le collecteur (11).

2. Dispositif suivant la revendication 1, caractérisé en ce que l'enveloppe extérieure (1) ainsi que l'enveloppe intérieure (2) sont chacune formées par deux demi sphères réunies à l'équateur.

3. Dispositif suivant la revendication 1, caractérisé en ce que le pulvérisateur (10) est situé au milieu du capteur (1).

4. Dispositif suivant la revendication 1, caractérisé en ce que le réservoir (6) est relié d'une part à une conduite d'adduction (12) d'eau froide et d'autre part à une conduite d'évacuation (13) avec vanne (14) et en ce que l'échangeur (7) est positionné dans l'axe vertical du socle (4) et du réservoir (6).

## Patentansprüche

1. Solar-Heisswasserbereiter bestehend aus einem kugelförmigen Sonnenkollektor (1, 2) mit einem durchsichtigen Aussenmantel (1) und einem Innenmantel (2), der mit einem die Sonnenstrahlung absorbierenden Farbstoff beschichtet ist, sowie einem Kreis für ein erstes Wärmeübertragungsmittel mit einer Pumpe (8), einem im Innern des Sonnenkollektors (1, 2) befindlichen Zerstäuber (10), der das zerstäubte Wärmeübertragungsmittel gegen die Innenfläche des Innenmantels (2) sprüht, einer Leitung (9), die die Pumpe (8) mit dem Zerstäuber (10) verbindet, und einem Kollektor (11), der die von der Innenfläche rinnende Flüssigkeit auffängt, dadurch gekennzeichnet,

—dass der Kollektor (1, 2) durch ein Tragrohr auf einem halbkugeligen Sockel (4) befestigt ist, welcher einen durch eine zweite Flüssigkeit wärmeisolierten Behälter (6) enthält;

—dass der Kollektor (11) durch einen im Tragrohr befindlichen Hohlraum gebildet wird, der Wärmeübertragungsmittelkreis einen im Behälter (6) befindlichen Wärmeaustauscher (7) beinhaltet und zwischen dem Kollektor (11) und der Pumpe (8) eingesetzt ist,

—und dass die Leitung (9) durch den Kellektor (11) führt und in Wärmekontakt mit der im Kollektor (11) aufgefangenen Flüssigkeit ist.

2. Solar-Heisswasserbereiter nach Anspruch 1, dadurch gekennzeichnet,

—dass der Aussenmantel (1) sowie der Innenmantel (2) jeweils durch zwei Halbkugeln gebildet werden, die an der Gürtellinie miteinander verbunden sind.

3. Solar-Heisswasserbereiter nach Anspruch 1, dadurch gekennzeichnet,

—dass der Zerstäuber (11) in der Mitte des Kollektors (1) angeordnet ist.

4. Solar-Heisswasserbereiter nach Anspruch 1, dadurch gekennzeichnet,

—dass der Behälter (6) einerseits mit einer Kaltwasserzuleitung (12) und andererseits mit einer Abflussleitung (13) mit Hahn (14) verbunden ist,

—und dass der Austauscher (7) in der senkrechten Achse des Sockels (4) und des Behälters (6) angeordnet ist.

**Claims**

1. Solar water heater device comprising a solar collector (1, 2) of spherical shape with a transparent external casing (1) and an internal casing (2) coated with a solar radiation absorbing dye, and a circuit for a first heat-carrying fluid with a pump (8), an atomizer (10) situated inside the collector (1, 2) and projecting the atomized fluid on the inner surface of the inner casing (2), a duct (9) connecting the pump (8) with the atomizer (10), and a trap (11) collecting the fluid flowing over the inner surface, characterized in the the collector (1, 2) is mounted by means of a support tube on a semispherical base (4) containing a heat insulated reservoir (6) for a second fluid, in that the trap (11) is formed by a space situated inside the support tube, the heat-carrying fluid circuit comprises a heat exchanger (7) situated in the reservoir (6) and inserted between the trap (11) and the pump (8), and in that the duct (9) passes through the trap (11) and is in heat contact with the fluid collected in the trap.

2. Device as claimed in claim 1, characterized in that the outer casing (1) as well as the inner casing (2) are each formed by two semi spheres joined together at the equator.

3. Device according to claim 1, characterized in that the atomizer (10) is situated in the middle of the collector (1).

4. Device according to claim 1, characterized in that the reservoir (6) is connected on the one hand to a cold water inlet pipe (12) and on the other to a discharge pipe (13) with a valve (14) and in that the exchanger (7) is positioned in the vertical axis of the base (4) and of the reservoir (6).